# EUROPÄISCHE PATENTSCHRIFT

(11) **EP 3 213 403 B1**
(45) Veröffentlichungstag und Bekanntmachung des Hinweises auf die Patenterteilung: **17.06.2020**
(21) Anmeldenummer: 15767126.4
(22) Anmeldetag: 16.09.2015
(51) Int. Cl.: H02P 9/48, H02P 9/30, B60R 16/03, H02J 7/14, H02K 1/00

(54) **VERFAHREN UND VORRICHTUNG ZUR STEUERUNG EINES FREMDERREGTEN ELEKTRISCHEN GENERATORS IN EINEM BORDNETZ EINES KRAFTFAHRZEUGES**
METHOD AND DEVICE FOR CONTROLLING A SEPARATELY EXCITED ELECTRIC GENERATOR IN A VEHICLE ELECTRICAL SYSTEM OF A MOTOR VEHICLE
PROCÉDÉ ET DISPOSITIF DE COMMANDE D'UN GÉNÉRATEUR ÉLECTRIQUE EXCITÉ EXTÉRIEUREMENT DANS UN RÉSEAU DE BORD D'UN VÉHICULE AUTOMOBILE

(30) Priorität: 31.10.2014 DE 102014222337
(43) Veröffentlichungstag der Anmeldung: 06.09.2017
(73) Patentinhaber: Continental Teves AG & Co. OHG, 60488 Frankfurt am Main (DE)
(72) Erfinder: SCHROTH, Hans, 63543 Neuberg (DE); KUTZNER, Michael, 65843 Sulzbach (DE)
(86) Internationale Anmeldenummer: PCT/EP2015/071266
(87) Internationale Veröffentlichungsnummer: WO 2016/066321

(56) Entgegenhaltungen:
- DE-A1- 10 040 112
- DE-A1-102007 000 618
- DE-A1-102008 011 465
- DE-A1-102010 029 967
- FR-A1- 2 926 414

## Beschreibung

Die vorliegende Erfindung betrifft den Betrieb und die Steuerung eines fremderregten elektrischen Generators in einem Bordnetz eines Kraftfahrzeuges, insbesondere Verfahren und Vorrichtungen zur Steuerung der Erregerspannung eines derartigen Generators, sowie einen derartigen Generator als solchen.

Aus dem Stand der Technik ist es bekannt, bei einem fremderregten elektrischen Generator in einem Bordnetz eines Kraftfahrzeuges eine Einstellung der Erregerspannung zum Zwecke einer Regelung einer Ist-Ausgangsspannung des Generators auf eine vorbestimmte Soll-Ausgangsspannung des Generators vorzunehmen.

DE 10 2010 029967 A1 offenbart ein Verfahren zum Ausgleich eines auf einer Lastzuschaltung oder einer Drehzahländerung beruhenden Einbruchs der Ausgangsspannung eines Kraftfahrzeuggenerators mittels eines Generatorreglers, der ein ein Tastverhältnis aufweisendes, den Erregerstrom des Kraftfahrzeuggenerators erhöhendes, Steuersignal bereitstellt.

DE 100 40 112 A1 offenbart ein Verfahren zur Bestimmung eines Drehmoments einer elektrischen Maschine, insbesondere eines Generators in einem.

FR 2 926 414 A1 offenbart ein Verfahren zum Betrieb eines an einer Verbrennungsmaschine mechanisch gekoppelten Wechselstromgenerators, bei dem eine Verzögerung der Verbrennungsmaschine basierend auf der Messung der Veränderung der Drehzahl des Wechselstromgenerators erfasst und mit einem vorgegebenen Schwellwert verglichen wird. Falls der Verzögerungsmesswert den Schwellwert nicht überschreitet und die elektrische Last steigt, so wird die Erregungsspannung für den Wechselstromgenerator erhöht. Bei Überschreitung des Schwellwertes durch den Verzögerungsmesswert wird eine niedrige Erregungsspannung festgelegt.

DE 10 2008 011465 A1 offenbart einen Mehrphasengenerator mit einer Erregerwicklung, die als Doppelschlusswicklung mit einer geregelt betriebenen Nebenschlusswicklung und einer durch den Laststrom gespeisten Reihensschlusswicklung ausgebildet ist.

DE 10 2007 000618 A1 offenbart eine Motorsteuereinheit, die gemäß einer Ansprechverzögerung eines Motors ein bedingtes Leistungserzeugungsmoment berechnet, das zulässig ist, durch einen Leistungsgenerator verwendet zu werden. Eine Generatorsteuereinheit zum Steuern des Leistungsgenerators ist vorgesehen, die eine Sollleistung berechnet, die durch den Leistungsgenerator zu erzeugen ist, so dass eine Batteriespannungsschwankung und eine Motordrehzahlschwankung unterdrückt werden.

Die hierfür bekannten Vorrichtungen umfassen üblicherweise:
- einen aus dem Bordnetz versorgten ansteuerbaren DC/DC-Wandler zur Erzeugung einer (variablen) Erregerspannung für den Generator,
- eine Vergleichseinrichtung zum Vergleichen einer Ist-Ausgangsspannung des Generators mit einer vorbestimmten Soll-Ausgangsspannung des Generators und zum Ausgeben eines Abweichungssignals (als Ansteuersignal) an den DC/DC-Wandler, um somit die Ist-Ausgangsspannung auf die Soll-Ausgangsspannung zu regeln.

Der Begriff "fremderregter elektrischer Generator" soll im Sinne der Erfindung eine drehangetriebene elektrische Maschine bezeichnen, welche eine zugeführte mechanische Drehleistung mittels Induktion in eine elektrische Leistung umwandelt, wobei ein für die Induktion erforderliches Magnetfeld durch Bestromung einer Erregerspule des Generators erzeugt wird.

Der Begriff "Erregerspannung" ist im Sinne der Erfindung diejenige Spannung, welche an der Erregerspule des Generators angelegt den Erregerstrom durch die Erregerspule treibt.

Der mechanische Drehantrieb des Generators erfolgt üblicherweise durch eine mechanische Kopplung des Generators mit einer Brennkraftmaschine (z. B. Otto- oder Dieselmotor) des Kraftfahrzeuges, wobei diese Brennkraftmaschine z. B. gleichzeitig eine mechanisch unmittelbar zum Antrieb des betreffenden Kraftfahrzeuges nutzbare Drehleistung bereitstellen kann, oder aber z. B. als so genannter "Range Extender" eines Seriell-Hybrid-Kraftfahrzeuges ausschließlich zum Antrieb des elektrischen Generators dienen kann.

Der Begriff "Ausgangsspannung (des Generators)" bezeichnet im Sinne der Erfindung die im Generator induzierte und üblicherweise gleichgerichtete Spannung zur Versorgung des Bordnetzes. Bei einem durch einen elektrischen Energiespeicher (wie z. B. Bleiakkumulator) gepufferten Bordnetz entspricht eine gewünschte Soll-Ausgangsspannung des Generators zumeist einer so genannten Ladeendspannung des betreffenden Energiespeichers (z. B. etwa 14 V).

Bei der erwähnten Regelung der Generatorausgangsspannung wird fortlaufend eine Ist-Ausgangsspannung als Regelgröße erfasst, mit der vorbestimmten Soll-Ausgangsspannung als Führungsgröße verglichen und im Sinne einer Angleichung der Ist-Ausgangsspannung an die Soll-Ausgangsspannung durch die genannte Einstellung der Erregerspannung beeinflusst.

Wenngleich die bekannten Verfahren und Vorrichtungen zur Aufrechterhaltung einer gewünschten Bordnetzspannung in den meisten Betriebssituationen des elektrischen Systems des Kraftfahrzeuges gut geeignet sind, so kann es zu nachteiligen Abweichungen der Generatorausgangsspannung von der vorbestimmten Soll-Ausgangsspannung dann kommen, wenn irgendein aus dem Bordnetz versorgter "Spitzenlastverbraucher" ganz plötzlich zu einem nennenswert erhöhten elektrischen Leistungsbedarf führt. In derartigen Fällen ist die herkömmliche Regelung oftmals nicht in der Lage bzw. zu "träge", diesem erhöhten Leistungsbedarf durch eine entsprechende Erhöhung der Erregerspannung und folglich des Erregerstromes so rasch nachzukommen, wie dies wünschenswert wäre.

Dieses Problem ist z. B. besonders bedeutend bei der abrupten Zuschaltung sicherheitsrelevanter Systeme, wie z. B. von Systemen zur zwangsweisen elektrischen Betätigung einer Bremse des Kraftfahrzeuges, da in solchen Fällen ein Absinken der Bordnetzspannung die ordnungsgemäße Funktion des sicherheitsrelevanten Systems gefährdet.

Es ist eine Aufgabe der vorliegenden Erfindung, bei einem Verfahren und einer Vorrichtung der eingangs erläuterten Art insbesondere auch im Falle von abrupten und nennenswerten Veränderungen des Leistungsbedarfs eine zur Vermeidung größerer Abweichungen der Ist-Ausgangsspannung von der Soll-Ausgangsspannung geeignete Steuerung des Generators bereitzustellen.

Diese Aufgabe wird erfindungsgemäß durch die Merkmale der unabhängigen Ansprüche 1 und 5 gelöst.

Der Begriff "Lastanforderung" bezeichnet hierbei eine für den betreffenden Spitzenlastverbraucher (z. B. elektrisch betätigtes Bremssystem) unmittelbar vor dessen tatsächlicher Aktivierung vorliegende Information über den mit dessen Aktivierung einhergehenden elektrischen Leistungsbedarf. Derartige Lastanforderungen bzw. entsprechende Lastanforderungssignale können in analoger oder bevorzugt digitaler Form (Datensignal) von dem betreffenden Spitzenlastverbraucher selbst (z. B. erwähntes Bremssystem) oder von einer Einrichtung erzeugt und ausgegeben werden, welche ein Zuschalten und Abschalten derartiger Spitzenlastverbraucher initiiert (z. B. eine zentrale Steuereinrichtung für die Kraftfahrzeugelektronik).

Durch die Auswertung der Lastanforderungen wenigstens eines Spitzenlastverbrauchers können, z. B. anhand vorbestimmter Kriterien, Ausnahmesituationen erfasst werden, in welchen die normalerweise stattfindende Regelung zu träge wäre, um der Lastanforderung gerecht zu werden. Auf Basis des Auswertungsergebnisses kann sodann in derartigen Ausnahmesituation vorteilhaft die modifizierte, d. h. nicht auf einer einfachen Regelung der beschriebenen Art beruhende Einstellung der Erregerspannung vorgenommen werden.

Mit der Erfindung kann somit insbesondere ein Stellverfahren mit optimierter dynamischer Leistungsfähigkeit eines elektrischen Generators (z. B. Klauenpolgenerator) in einem Kraftfahrzeug realisiert werden.

Falls die Lastanforderungen von mehreren Spitzenlastverbrauchern ausgewertet werden, so kann bei einem gleichzeitigen oder zeitlich überlappenden Auftreten von Lastanforderungen mehrerer Spitzenlastverbraucher vorteilhaft eine modifizierte Einstellung der Erregerspannung vorgesehen werden, welche dem entsprechenden "Gesamtbedarf" an elektrischer Leistung Rechnung trägt. So kann z. B. ein zeitabhängiger Gesamtbedarf durch die Auswerteeinrichtung ermittelt (z. B. berechnet) und an die Ausnahmesteuereinrichtung kommuniziert werden, in welcher dann für den konkreten Fall geeignete Parameter der modifizierten Einstellung ermittelt (z. B. berechnet) werden können.

In einer Ausführungsform beeinflusst die modifizierte Einstellung nicht die z. B. konstant vorgegebene Soll-Ausgangsspannung des Generators.

In einer anderen Ausführungsform ist die modifizierte Einstellung dazu geeignet, eine zeitweilig veränderte, insbesondere eine zeitweilig erhöhte, Soll-Ausgangsspannung des Generators vorzugeben und ein Nachfolgen der Ist-Ausgangsspannung dieser veränderten Soll-Ausgangsspannung zu realisieren.

In einer Ausführungsform ist vorgesehen, dass die Lastanforderungen über ein digitales Bussystem des Kraftfahrzeuges kommuniziert und mittels einer programmgesteuerten Einrichtung ausgewertet werden.

Das digitale Bussystem kann z. B. gemäß eines herkömmlichen Standards (wie z. B. CAN, Flexray, LIN etc.) ausgebildet sein.

In diesem Fall besitzt die programmgesteuerte Einrichtung die Funktionalität der bei der Vorrichtung vorgesehenen Auswerteeinrichtung zur Auswertung von Lastanforderungen und zur Erfassung von Ausnahmesituationen.

Die Lastanforderung eines bestimmten Spitzenlastverbrauchers kann z. B. eine Information betreffend einen Zeitraum des besonderen (zusätzlichen) Leistungsbedarfs sowie betreffend den quantitativen Verlauf dieses besonderen Leistungsbedarfs innerhalb dieses Zeitraumes umfassen. Der besondere Leistungsbedarf kann konstant oder aber als zeitabhängiger Bedarf im genannten Zeitraum definiert sein.

Bei der Vorrichtung wird die modifizierte Einstellung der Erregerspannung durch eine Ausnahmesteuereinrichtung bewirkt.

Gemäß einer Ausführungsform wird die Funktionalität der Ausnahmesteuereinrichtung durch die bereits erwähnte programmgesteuerte Einrichtung bereitgestellt. In diesem Fall funktioniert die programmgesteuerte Einrichtung also sowohl zur Auswertung der Lastanforderungen als auch zum Bewirken der modifizierten Einstellung der Erregerspannung.

Bei der Vorrichtung wird das Ausnahmesteuersignal durch die Ausnahmesteuereinrichtung erzeugt.

Eine "Unterbrechung der Regelung" und stattdessen die Vornahme einer modifizierten Einstellung kann in vielfältiger Weise realisiert werden. Für eine solche Unterbrechung kann z. B. eine von der Ausnahmesteuereinrichtung angesteuerte Schaltereinrichtung eingesetzt werden. Insbesondere kann die Schaltereinrichtung z. B. einen Umschalter umfassen, welcher derart angeordnet und angesteuert wird, dass in einer Ausnahmesituation ein an einer bestimmten Stelle des Regelkreises normalerweise weitergeleitetes Signal "verworfen" (nicht weitergeleitet) und stattdessen ein von der Ausnahmesteuereinrichtung erzeugtes Signal an dieser Stelle in den Regelkreis eingeleitet wird.

Gemäß einer diesbezüglichen Ausführungsform ist beispielsweise vorgesehen, dass die bei der Regelung vorgesehene Einstellung der Erregerspannung als solche zwar aufrechterhalten wird, jedoch nicht auf Basis eines Ergebnisses des Vergleiches zwischen der Ist-Ausgangsspannung und der Soll-Ausgangsspannung des Generators, sondern auf Basis des erwähnten Ausnahmesteuersignals als Ersatz für das Abweichungssignal. Mit anderen Worten wird bei dieser Ausführungsform der normalerweise aktive Regelungskreis an derjenigen Stelle aufgetrennt, an welcher das Abweichungssignal einer "Stelleinrichtung" (z. B. ansteuerbarer DC/DC-Wandler) eingegeben wird, und stattdessen dieser Stelleinrichtung das für den Ausnahmefall eigens generierte (z. B. berechnete) Ausnahmesteuersignal eingegeben.

In einer anderen Ausführungsform wird das von der Ausnahmesteuereinrichtung erzeugte Ausnahmesteuersignal nicht als Ersatz für das Abweichungssignal der Regelung, sondern als ein Steuersignal zur Ansteuerung einer eigens für den Ausnahmefall vorgesehenen Stelleinrichtung verwendet, welche in der Ausnahmesituation zur Ausgabe der Erregerspannung für den Generator vorgesehen ist. Mit anderen Worten wird bei dieser Ausführungsform der normale Regelkreis an einer Stelle zwischen der normalerweise verwendeten Stelleinrichtung und dem Generator unterbrochen und an dieser Stelle eine im Ausnahmefall eigens erzeugte Erregerspannung an den Generator angelegt.

Bei der modifizierten Einstellung der Erregerspannung kann alternativ oder zusätzlich zu einer Unterbrechung der Regelung eine "Beimischung" eines von der Ausnahmesteuereinrichtung gegebenen Steuersignals an einer bestimmten Stelle des Regelkreises vorgesehen sein. Dies kann z. B. durch einen an dieser Stelle angeordneten Additionsknoten zur Addition (ggf. gewichteten Addition) eines an dieser Stelle in der Normalsituation im Regelkreis weitergeleiteten Signals mit einem in der Ausnahmesituation von der Ausnahmesteuereinrichtung erzeugten Steuersignals realisiert werden.

Die Erfindung wird nachfolgend anhand von Ausführungsbeispielen mit Bezug auf die beigefügten Zeichnungen weiter beschrieben. Es stellen dar:
Fig. 1 ein Blockschaltbild zur Veranschaulichung eines Energieflusses in einem Bordnetz eines Kraftfahrzeuges für eine Situation einer Entladung eines elektrischen Energiespeichers,
Fig. 2 ein Blockschaltbild zur Veranschaulichung eines Energieflusses in einem Bordnetz eines Kraftfahrzeuges für eine Situation einer Nachladung eines elektrischen Energiespeichers,
Fig. 3 ein Diagramm zur Veranschaulichung verschiedener Verläufe eines Erregerstromes Ierr eines fremderregten elektrischen Generators in Abhängigkeit von der Zeit t,
Fig. 4 ein Blockschaltbild einer Vorrichtung zur Steuerung eines fremderregten elektrischen Generators gemäß eines Ausführungsbeispiels der Erfindung,
Fig. 5 ein Blockschaltbild einer Vorrichtung zur Steuerung eines fremderregten elektrischen Generators gemäß eines weiteren Ausführungsbeispiels der Erfindung,
Fig. 6 eine schematische Darstellung eines fremderregten elektrischen Generators von herkömmlicher Bauart,
Fig. 7 eine schematische Darstellung eines abgewandelt aufgebauten und gemäß einer ersten Variante umschaltbaren Generators, und
Fig. 8 eine schematische Darstellung des abgewandelt aufgebauten und gemäß einer zweiten Variante umschaltbaren Generators.

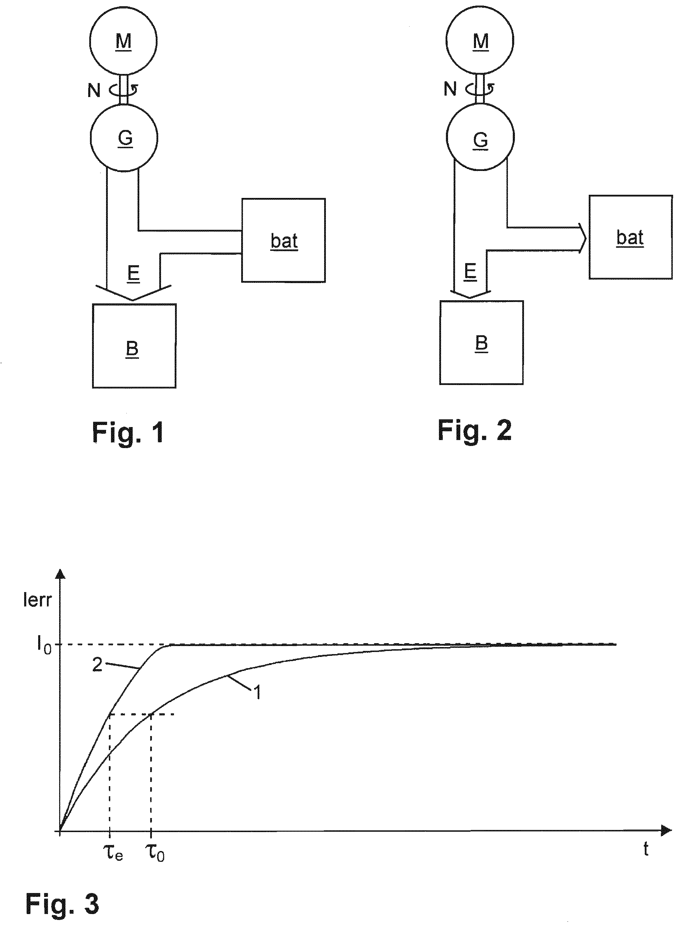

Die Fig. 1 und 2 veranschaulichen die der Erfindung zugrundeliegende prinzipielle Problematik einer zuverlässigen Versorgung eines elektrischen Bordnetzes B eines Kraftfahrzeuges mit elektrischer Energie E.

Für diese Energieversorgung stehen ein von einem Motor M (z. B. Brennkraftmaschine des Kraftfahrzeuges) antreibbarer elektrischer Generator G sowie ein zur Pufferung mit dem Bordnetz B gekoppelter elektrischer Energiespeicher (z. B. Bleiakkumulator) bat zur Verfügung.

Der elektrischer Generator G wird hierbei unmittelbar oder über ein Übersetzungsgetriebe durch den Motor M drehangetrieben. Die Drehzahl dieses Generator-Drehantriebes ist in den Fig. 1 und 2 mit N symbolisiert.

Fig. 1 veranschaulicht einen insofern ungünstigen Betriebsfall, als z. B. aufgrund einer relativ geringen Drehzahl N die benötigte Energie E bzw. elektrische Leistung lediglich durch Bereitstellung elektrischer Energie sowohl des Generators G als auch des Energiespeichers bat geliefert werden kann.

Fig. 2 veranschaulicht demgegenüber einen insofern günstigen Betriebsfall, als aufgrund einer relativ hohen Drehzahl N die vom Generator G bereitgestellte Energie größer als die vom Bordnetz B benötigte Energie E ist, so dass ein Teil der vom Generator G erzeugten Energie bzw. Leistung zur Nachladung des elektrischen Energiespeichers bat genutzt werden kann.

Die Ausgestaltung des Generators G als ein fremderregter elektrischer Generator ermöglicht es vorteilhaft, die am Generatorausgang ausgegebene Versorgungsspannung bzw. auch die damit zur Verfügung stehende elektrische Leistung außer durch eine Veränderung der Drehzahl N auch dadurch zu beeinflussen, dass eine den Erregerstrom Ierr des Generators G treibende Erregerspannung Uerr bedarfsgerecht gesteuert wird.

Die vorliegende Erfindung geht in dieser Hinsicht aus von bekannten Verfahren und Vorrichtungen zur Einstellung der Erregerspannung Uerr zum Zwecke einer Regelung einer Ist-Ausgangsspannung Ugen des Generators G auf eine vorbestimmte Soll-Ausgangsspannung Ugensoll des Generators G.

Wenngleich die bekannten Regelverfahren und Regelvorrichtungen zur Regelung einer gewünschten Bordnetzspannung Ugen (hier z. B. entsprechend einer Batteriespannung Ubat) in den meisten Betriebssituationen gut geeignet sind, so kann es zu nachteiligen Abweichungen der Bordnetzspannung bzw. Generatorausgangsspannung Ugen dann kommen, wenn abrupte nennenswerte Änderungen des Energiebedarfes des Bordnetzes B auftreten.

In derartigen Fällen ist die herkömmliche Regelung z. B. oftmals zu träge, um unerwünschte Abweichungen der Ist-Ausgangsspannung Ugen von der Soll-Ausgangsspannung Ugensoll zu vermeiden.

Fig. 3 veranschaulicht die prinzipielle "Trägheit" der Einstellung des Erregerstromes Ierr durch Anlegen einer Erregerspannung Uerr an einer Erregerspule.

In Fig. 3 sind zwei beispielhafte Verläufe 1 und 2 eines Erregerstromes Ierr in Abhängigkeit von der Zeit t eingezeichnet.

Der Stromverlauf 1 zeigt einen Fall, in welchem ausgehend von einem Erregerstrom Ierr = 0 bei t = 0 ein Anstieg des Erregerstromes Ierr durch Anlegen einer konstanten Erregerspannung Uerr bewirkt wird, hier z. B. einer Nenn-Bordnetzspannung (Uerr = Ubat = 14 V).

Bezeichnet man die Induktivität der zur Erzeugung des Erregermagnetfeldes erforderlichen Erregerspule mit L und den ohmschen Widerstand dieser Erregerspule mit R, so ergibt sich bekanntermaßen eine asymptotische Annäherung des Erregerstromes Ierr (t) an einen Endwert I₀ = Uerr / R.

Eine Anstiegsgeschwindigkeit lässt sich hierbei durch eine Zeitkonstante τ = L / R charakterisieren. Diese Zeitkonstante τ entspricht derjenigen Zeitspanne, die vergeht, bis der Erregerstrom Ierr etwa 63% des Endwertes I₀ erreicht hat.

Die Zeitkonstante τ verhindert somit ganz prinzipiell eine verzögerungsfreie Veränderung des Erregerstromes Ierr durch die bekannte Einstellung des Erregerspannung Uerr im Rahmen einer Regelung der Generatorausgangsspannung Ugen. Für den Stromverlauf 1 in Fig. 3 ist die zugehörige Zeitkonstante mit τ₀ bezeichnet.

Auf den Stromverlauf 2 in Fig. 3 wird weiter unten noch eingegangen.

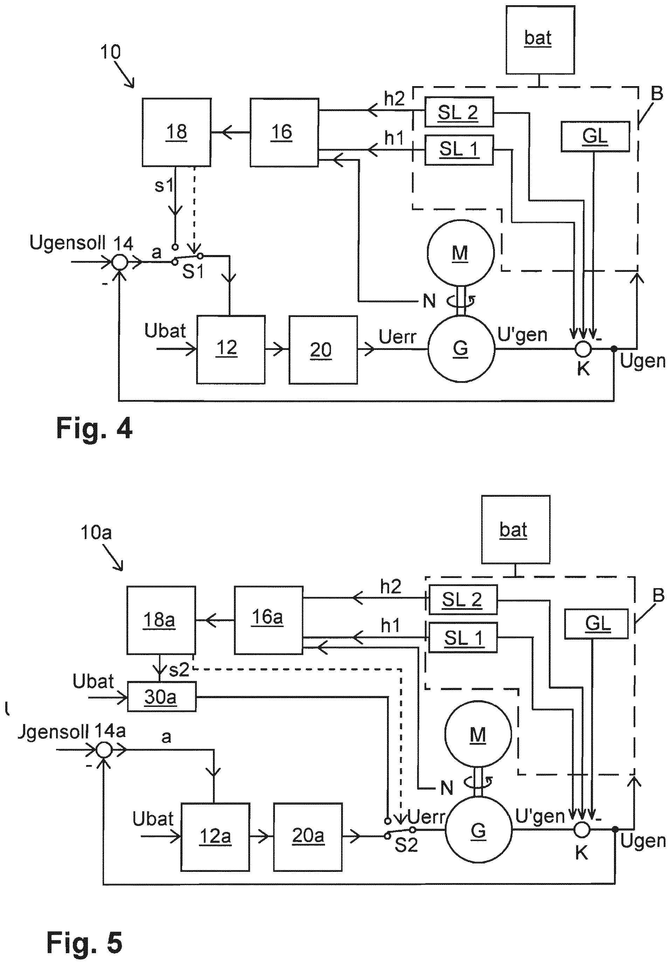

Nachfolgend werden mit Bezug auf die Fig. 4 bis 8 verschiedene Ausführungsbeispiele von Verfahren und Vorrichtungen zur Steuerung eines elektrischen Generators G bzw. insbesondere zur Steuerung einer am Generator G angelegten Erregerspannung Uerr näher beschrieben, bei welchen insbesondere auch im Falle von abrupten und nennenswerten Veränderungen des durch den Generator G bereitzustellenden Leistungsbedarfs größere Abweichungen der Ist-Ausgangsspannung Ugen von der Soll-Ausgangsspannung Ugensoll vermieden werden.

Fig. 4 zeigt ein Ausführungsbeispiel einer Vorrichtung 10 zur Steuerung einer Erregerspannung Uerr eines fremderregten elektrischen Generators G in einem Bordnetz B eines Kraftfahrzeuges.

Die Steuerung umfasst eine Einstellung der Erregerspannung Uerr im Rahmen einer Regelung einer Ist-Ausgangsspannung Ugen des Generators G auf eine vorbestimmte Soll-Ausgangsspannung Ugensoll des Generators G.

Die Vorrichtung 10 umfasst einen aus dem Bordnetz B versorgten ansteuerbaren DC/DC-Wandler 12 zur Erzeugung der Erregerspannung Uerr für den Generator G. Die Versorgung des DC/DC-Wandlers 12 ist in Fig. 4 symbolisiert durch die Versorgung mit einer Batteriespannung Ubat einer das Bordnetz B puffernden Batterie bat.

Im Normalfall entspricht die Ausgangsspannung Ugen des Generators G dieser Batteriespannung Ubat bzw. einer "Nennspannung" des Bordnetzes B.

Das Bordnetz B ist in Fig. 4 durch einen Kasten symbolisiert, welcher in der schematischen Darstellung von Fig. 4 einen "Grundlastverbraucher" GL und mehrere "Spitzenlastverbraucher", hier beispielhaft mit SL1 und SL2 bezeichnet, enthält.

Der Grundlastverbraucher GL symbolisiert eine Gesamtheit von elektrischen Verbrauchern des betreffenden Kraftfahrzeuges, welche jeweils für sich genommen einen relativ geringen Leistungsbedarf besitzen und/oder deren betriebsmäßige Zuschaltung und Abschaltung zu keiner abrupten und zugleich nennenswerten Veränderung des Gesamtleistungsbedarfes des Bordnetzes B führt.

Demgegenüber sollen die in Fig. 4 beispielhaft eingezeichneten zwei Spitzenlastverbraucher SL1, SL2 elektrische Verbraucher im Bordnetz B symbolisieren, deren Zuschaltung und Abschaltung jeweils zu einer abrupten und zugleich nennenswerten Veränderung des Gesamtleistungsbedarfes des Bordnetzes B führt.

Typischerweise können als der "Grundlastverbraucher" GL z. B. Verbraucher wie eine Bordelektronik ("Bordcomputer"), Beleuchtungsmittel (z. B. Scheinwerfer und Innenraumbeleuchtung), Einrichtungen zur Belüftung und Klimatisierung des Fahrzeuginnenraumes (z. B. Klimaanlagensteueraktoren, Sitzheizungen etc.) zusammengefasst werden.

Demgegenüber können als "Spitzenlastverbraucher" Verbraucher wie z. B. Aktoren zur zwangweisen Betätigung einer Bremse des Fahrzeuges klassifiziert werden.

Dem Umstand, dass die Batterie bat bzw. der Generator G durch den Leistungsbedarf der (momentan zugeschalteten) Verbraucher des Bordnetzes B "belastet" werden, ist in der Symbolik von Fig. 4 dadurch Rechnung getragen, dass am Ausgang des Generators G eine fiktive Ausgangsspannung U'gen eingezeichnet ist, welche aufgrund der tatsächlichen "Belastungen" der elektrischen Verbraucher GL, SL1, SL2 auf die tatsächlich bereitgestellte Ausgangsspannung Ugen reduziert wird. Der "Schaltungsknoten" K in Fig. 4 symbolisiert diesen spannungsreduzierenden Effekt der Verbraucher GL, SL1, SL2 am Ausgang des Generators G (Zu bedenken ist hierbei ein in der Praxis immer vorhandener Innenwiderstand des Generatorausganges) . In diesem Sinne könnte man die fiktive Ausgangsspannung U'gen auch als Leerlaufspannung (des unbelasteten Generators G) bezeichnen.

Der Generator G wird durch einen Motor M drehangetrieben, z. B. durch eine auch zum Antrieb des Kraftfahrzeuges verwendete Brennkraftmaschine (z. B. Otto- oder Dieselmotor), und zwar mit einer Drehzahl N, die z. B. identisch zur Motordrehzahl ist oder aber (durch Zwischenschaltung eines Getriebes) in einem z. B. festen Übersetzungverhältnis dazu steht.

Die Vorrichtung 10 umfasst des weiteren eine Vergleichseinrichtung 14 (hier: z. B. einen Subtraktionsknoten) zum Vergleichen der momentanen Generatorausgangsspannung, also der Ist-Ausgangsspannung Ugen mit einer vorbestimmten Soll-Ausgangsspannung Ugensoll und zum Ausgeben eines Abweichungssignals a an einen Steuereingang des DC/DC-Wandlers 12. Im einfachsten Fall, und wie dargestellt, wird das Abweichungssignal a als die Differenz Ugensoll - Ugen gebildet. Abweichend davon könnte das Abweichungssignal a jedoch auch in anderer Weise gebildet bzw. definiert sein (solange es charakteristisch für eine Abweichung zwischen Ugensoll und Ugen ist).

Falls das Abweichungssignal a angibt, dass Ugen kleiner als Ugensoll ist, so wird der DC/DC-Wandler 12 zur Ausgabe einer höheren Erregerspannung Uerr angesteuert, woraufhin dann auch der Erregerstrom Ierr im Generator G ansteigt, so dass auch die Ausgangsspannung Ugen ansteigt.

Umgekehrt, falls das Abweichungssignal a anzeigt, dass Ugen größer als Ugensoll ist, so wird der DC/DC-Wandler 12 zur Ausgabe einer verringerten Erregerspannung Uerr angesteuert, woraufhin dann auch der Erregerstrom Ierr, so dass die Ausgangsspannung Ugen ebenfalls absinkt.

Die Berücksichtigung des Abweichungssignals a als Ansteuersignal für den DC/DC-Wandler resultiert somit in einer Regelung der Ist-Ausgangsspannung Ugen auf die Soll-Ausgangsspannung Ugensoll.

Diese Regelung ist im dargestellten Beispiel eine Proportionalregelung ("P-Regler"). Abweichend von diesem Beispiel können jedoch auch kompliziertere Regelcharakteristiken verwendet werden.

Eine Besonderheit der Vorrichtung 10 besteht darin, dass diese eine Auswerteeinrichtung 16 zur Auswertung von "Lastanforderungen" h1, h2 der (in diesem Beispiel zwei) aus dem Bordnetz B versorgten Spitzenlastverbraucher SL1 und SL2 und darauf basierend zur Erfassung von "Ausnahmesituationen" umfasst.

Im dargestellten Beispiel jede Lastanforderung h1, h2 jeweils eine für den betreffenden Spitzenlastverbraucher SL1 bzw. SL2 unmittelbar vor dessen tatsächlicher Aktivierung vorliegende Information über den mit dessen Aktivierung einhergehenden (zusätzlichen) elektrischen Leistungsbedarf.

Derartige Leistungsanforderungen h1, h2 werden im dargestellten Beispiel über ein digitales Bussystem des Kraftfahrzeuges zu der Auswerteeinrichtung 16 kommuniziert, die hier als eine software-implementierte Funktionalität einer programmgesteuerten Einrichtung ausgebildet ist.

Bei dem verwendeten Bussystem kann es sich z. B. um einen CAN-, einen LIN-Bus oder ein anderes geeignetes Bussystem, insbesondere ein Bussystem gemäß eines anderen gängigen Standards handeln.

Das Ergebnis der von der Auswerteeinrichtung 16 vorgenommenen Auswertung, also z. B. die Information darüber, dass ein bestimmter (in h1 bzw. h2 quantifizierter) zusätzlicher Leistungsbedarf für eine bestimmte (in h1 bzw. h2 quantifizierte) Zeitspanne ansteht, wird an eine Ausnahmesteuereinrichtung 18 der Vorrichtung 10 kommuniziert (sei es z. B. wieder über eine digitale Kommunikation über ein Bussystem oder z. B. durch eine interne Kommunikation innerhalb der genannten programmgesteuerten Einrichtung, in welcher auch die Ausnahmesteuereinrichtung 18 als eine Funktionalität implementiert ist).

Die Ausnahmesteuereinrichtung 18 dient dazu, im Falle einer durch die Auswertung erfassten Ausnahmesituation und den weiteren Informationen des Auswertungsergebnisses eine "modifizierte Einstellung der Erregerspannung Uerr" zu bewirken. Die Erfassung einer Ausnahmesituation beruht darauf, dass der zu erwartende zusätzliche Leistungsbedarf innerhalb einer vorbestimmten (relativ kleinen) Zeitspanne einen vorbestimmten Schwellwert übersteigt.

Durch die modifizierte Einstellung kann somit vorteilhaft eine von der zuvor beschriebenen reinen Regelung abweichende Maßnahme getroffen werden, welche der im Ausnahmefall angeforderten abrupten und nennenswerten Änderungen des Leistungsbedarfes Rechnung trägt.

Im dargestellten Beispiel sieht die modifizierte Einstellung der Erregerspannung Uerr eine zeitweilige Unterbrechung der Regelung und eine Einstellung der Erregerspannung Uerr in Abhängigkeit von einem Ausnahmesteuersignal s1 vor, welches die Ausnahmesteuereinrichtung 18 in Abhängigkeit von dem Ergebnis der vorangegangenen Auswertung erzeugt wird. Zu diesem Zweck steuert die Ausnahmesteuereinrichtung 18, wie in Fig. 4 durch einen gestrichelten Wirkungspfeil symbolisiert, einen Schalter S1 derart an, dass für die Zeitspanne der Ausnahmesituation nicht das von der Vergleichseinrichtung 14 ausgegebene Abweichungssignal a, sondern das von der Einrichtung 18 erzeugte Ausnahmesteuersignal s1 an den Steuereingang des DC/DC-Wandlers 12 ausgegeben wird.

Ein entscheidender Vorteil der Vorrichtung 10 besteht somit darin, dass mittels der Komponenten 16, 18, S1 eine "vorausschauende" Ansteuerung bzw. "Vorsteuerung" des DC/DC-Wandlers 12 erfolgen kann, was in der Praxis zu einer erheblichen Verbesserung der dynamischen Leistungsfähigkeit des Generators G führt.

Mit anderen Worten kommt es bei der Vorrichtung 10 im Falle einer abrupten und nennenswerten Leistungsbedarfsänderung nicht zu einer "Reaktion" auf eine infolge dieser Leistungsbedarfsänderung entstehenden Abweichung zwischen Ugen und Ugensoll, sondern es wird durch eine "Vorsteuerung" bereits zu einem Zeitpunkt in den Einstellmechanismus eingegriffen, zu welchem der zusätzliche Leistungsbedarf noch nicht entstanden ist, jedoch mehr oder weniger unmittelbar bevorsteht.

Die Erzeugung des Ausnahmesteuersignals s1 erfolgt bevorzugt programmgesteuert. Für eine optimale Festlegung bzw. Berechnung des Ausnahmesteuersignals s1 ist es zweckmäßig, wenn, wie in Fig. 4 dargestellt, eine Erfassung der (momentanen) Drehzahl N des Generators G erfolgt und diese Drehzahl N im Rahmen der Auswertung durch die Auswerteeinrichtung 16 berücksichtigt wird. Mithin ist es vorteilhaft möglich, bevorstehende Lastanforderungen "anzumelden" und diese bedarfsgerecht auszuregeln.

Eine weitere vorteilhafte Besonderheit der Vorrichtung 10 besteht darin, dass der DC/DC-Wandler 12 dazu ausgebildet ist, die Einstellung der Erregerspannung Uerr bedarfsweise auch auf negative Spannungswerte und auf Spannungswerte mit einem gegenüber der Bordnetzspannung (entsprechend der Batteriespannung Ubat) erhöhten Absolutwert zu ermöglichen.

Mit anderen Worten ist der DC/DC-Wandler 12 als ein "Hochsetzsteller" ausgestaltet, welcher somit die Erzeugung einer Ausgangsspannung Uerr nicht nur wie üblich in einem Bereich von 0 V bis zum Wert Ubat (z. B. 14 V) ermöglicht, sondern über diesen Bereich hinausgehend.

Im dargestellten Beispiel ist für die erzeugbare Erregerspannung Uerr ein Bereich von -60 V bis +60 V vorgesehen, wobei ein Spannungsbegrenzer 20 zur Sicherstellung dieser Grenzen, also eines maximalen positiven Spannungswertes von +60 V und eines minimalen negativen Spannungswertes von -60 V vorgesehen ist. Dem Spannungsbegrenzer 20 wird die Ausgangsspannung des DC/DC-Wandlers 12 zugeführt, um die (bedarfsweise entsprechend begrenzte) Erregerspannung Uerr an den Generator G zu liefern.

Der Vorteil dieses vergrößerten Wertebereiches von Uerr sei ergänzend mit Bezug auf Fig. 3 erläutert. Der in Fig. 3 eingezeichnete weitere Stromverlauf 2 veranschaulicht einen gegenüber dem Stromverlauf 1 deutlich rascheren Anstieg des Erregerstromes Ierr unter Verwendung einer größeren Erregerspannung Uerr. Damit der Erregerstrom Ierr nicht über einen beispielsweise fest vorgegebenen Maximalerregerstrom, wie hier z. B. I₀ "hinausschießt", ist die Erregerspannung Uerr kurz vor oder beim Erreichen dieses Maximalstromes entsprechend zu verringern. Definiert man für den Stromverlauf 2 als Erregerzeitkonstante diejenige Zeitspanne, die benötigt wird, um ca. 63 % von I₀ zu erreichen, so ergibt sich eine (scheinbare) Verkürzung der Erregerzeitkonstante von τ₀ (Stromverlauf 1) auf τ ₑ (Stromverlauf 2) .

Die im dargestellten Beispiel mit dem Spannungsbegrenzer 20 bewerkstelligte Spannungsbegrenzung besitzt den Vorteil, dass eine "Regelverstärkung", mit welcher das am Steuereingang des DC/DC-Wandlers 12 eingegebene Signal (Abweichungssignal a bzw. Ausnahmesteuersignal s1) in einen entsprechenden Spannungswert am Ausgang des DC/DC-Wandlers 12 umgesetzt wird, auch so hoch gewählt werden kann, dass der Spannungsbegrenzer 20 gewissermaßen eine Kappung des ansonsten (in Extremsituationen) vom DC/DC-Wandler ausgegebenen Spannungssignals bewirkt.

Der DC/DC-Wandler 12 mitsamt Spannungsbegrenzer 20 kann in der Praxis baulich mit Komponenten des Generators G (Rotor, Stator) zusammengefasst sein. Alternativ können die Komponenten 12, 20 auch separat vom Generator G vorgesehen sein.

Im Rahmen der Erfindung können alternativ oder zusätzlich auch eine oder mehrere weitere Vorrichtungskomponenten baulich mit dem Generator G (z. B. in einem gemeinsamen Gehäuse) zusammengefasst sein, z. B. die Komponenten 16, 18, S1, 20.

Bei einer komplizierteren Regelung kann z. B. durch Software realisiert ein mathematisches "Generatormodell" eingesetzt werden, wobei kontinuierlich elektrische und/oder magnetische Größen im Bereich des Generators (z. B. Durchflutung, Erregerstrom, Drehzahl, Innenwiderstand etc.) überwacht und bei der Informationsverarbeitung durch die Einrichtung 16 und/oder die Einrichtung 18 berücksichtigt werden.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Fig. 5 zeigt eine Vorrichtung 10a gemäß eines weiteren Ausführungsbeispiels.

Im Unterschied zu der Vorrichtung 10 umfasst die Vorrichtung 10a zur Bewerkstelligung einer modifizierten Einstellung einer Erregerspannung Uerr in erfassten Ausnahmesituationen einen eigens hierfür vorgesehenen ansteuerbaren DC/DC-Wandler 30a, welcher durch die Batteriespannung Ubat versorgt wird und an einem Steuereingang ein Ausnahmesteuersignal s2 von einer Ausnahmesteuereinrichtung 18a erhält. Abhängig von dem Ausnahmesteuersignal s2 erzeugt der DC/DC-Wandler 30a an seinem Ausgang die für die Ausnahmesituation benötigte Erregerspannung Uerr. Diese Erregerspannung Uerr wird sodann durch eine ebenfalls von der Ausnahmesteuereinrichtung 18a bewirkte Umstellung eines Schalters S2 zum Generator G geführt. Der Generator G erhält also nach Umschaltung des Schalters S2 die Erregerspannung Uerr nicht mehr von einem für Normalsituationen verwendeten DC/DC-Wandler 12a mit nachgeschaltetem Spannungsbegrenzer 20a, sondern von dem eigens vorgesehenen DC/DC-Wandler 30a.

Auch bei der in Fig. 5 dargestellten Vorrichtung 10a können insbesondere der DC/DC-Wandler 12a und der ggf. vorgesehene Spannungsbegrenzer 20a vorteilhaft baulich mit dem Generator G zusammengefasst sein. Alternativ oder zusätzlich ist es bei einer Ausführungsform der in Fig. 5 gezeigten Art z. B. vorteilhaft möglich, die Komponenten 16a, 18a, 30a und ggf. S2 baulich zusammenzufassen, etwa in einem modulartigen "Ausnahmesteuergerät", welches wiederum entweder separat angeordnet und einerseits mit dem oder den Spitzenlastverbrauchern und andererseits mit dem Schalter S2 bzw. dem Generator G zur Realisierung der in Fig. 5 dargestellten Konfiguration verbunden werden kann. Als Alternative zu einer separaten Anordnung eines derartigen Ausnahmesteuergerätes kommt z. B. in Betracht, die Komponenten 16a, 18a, 30a und S2 mit dem Generator G (z. B. innerhalb eines gemeinsamen Gehäuses) baulich zusammenzufassen. Falls es nur einen einzigen Spitzenlastverbraucher gibt, so kommt als Alternative außerdem in Betracht, die Komponenten 16a, 18a, 30a (und weniger bevorzugt den Schalter S2) baulich zusammengefasst mit diesem Spitzenlastverbraucher vorzusehen.

Abweichend von den Ausführungsbeispielen gemäß der Fig. 4 und 5, bei welchen in Ausnahmesituationen jeweils durch eine Umschaltung (des Schalters S1 bzw. S2) die für Normalsituationen vorgesehene Regelung letztlich ganz außer Kraft gesetzt wird, könnten diese Ausführungsbeispiele auch so modifiziert werden, dass die für Normalsituationen aktiven Regelschleifen auch in Ausnahmesituationen wirksam bleiben, wobei in Ausnahmesituationen jedoch ein von der Ausnahmesteuereinrichtung 18 bzw. 18a ausgegebenes Ausnahmeansteuersignal an geeigneter Stelle der betreffenden Regelschleife "beigemischt" wird. Bei den Beispielen gemäß der Fig. 4 und 5 könnten hierfür anstelle der Schalter S1 bzw. S2 jeweils Additionsknoten vorgesehen sein, welche diese Beimischung bewerkstelligen.

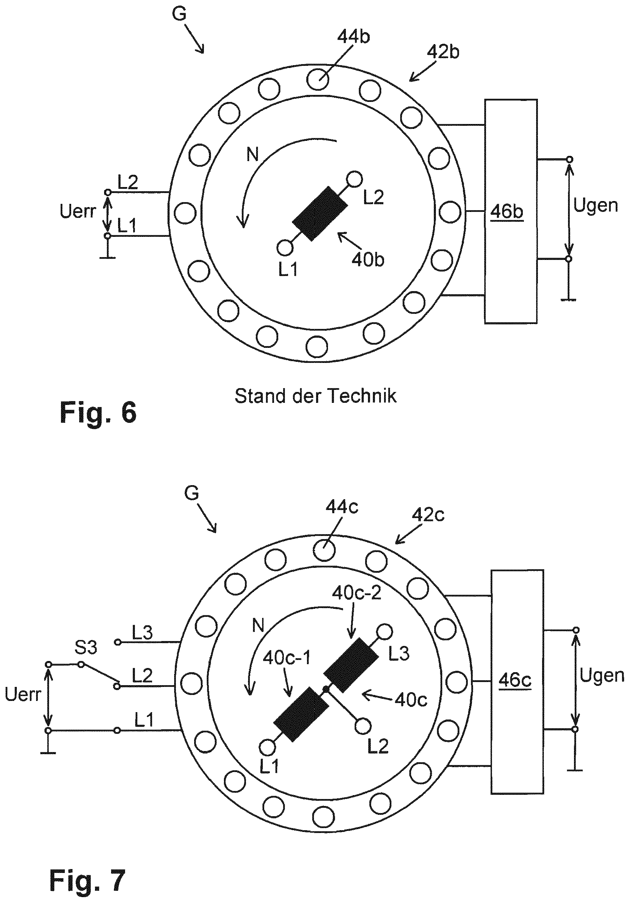

Fig. 6 zeigt schematisch den Aufbau eines herkömmlichen elektrischen Generators G, wie dieser bei den hier beschriebenen Steuerungsvorrichtungen und Steuerungsverfahren Verwendung finden kann.

Im dargestellten Beispiel wird eine Erregerspannung Uerr an Anschlüssen L1, L2 des Generators G angelegt und über (nicht dargestellte) Schleifringe an entsprechende Anschlüsse L1, L2 einer im Betrieb des Generators G mit einer Drehzahl N rotierenden Erregerspule 40b übertragen. Die Erregerspannung Uerr bewirkt somit einen entsprechenden Erregerstrom Ierr durch die Erregerspule 40b und aufgrund der Rotation dieser Erregerspule 40b ein rotierendes Magnetfeld.

Ein die rotierende Erregerspule 40b bzw. einen Rotor umgebender Stator 42b enthält eine Mehrzahl von Induktionsspulen, deren Wicklungen schematisch bei 44b eingezeichnet sind. Im dargestellten Beispiel sind drei solche Induktionsspulen mit einem gegenseitigen Winkelversatz von jeweils 120° vorgesehen, so dass das rotierende Magnetfeld zur Induktion einer durch entsprechende Verschaltung der Induktionsspulen resultierenden dreiphasigen Wechselspannung genutzt wird. Diese dreiphasige Wechselspannung wird mittels eines Gleichrichters 46b in die (für das DC-Bordnetz benötigte) Gleichspannung Ugen gewandelt.

Ein Generator G der in Fig. 6 dargestellten Art (z. B. so genannter Klauenpolgenerator)kann beispielsweise als der bei den Beispielen gemäß Fig. 4 (Vorrichtung 10) und Fig. 5 (Vorrichtung 10a) verwendeter Generator G vorgesehen sein.

Fig. 7 zeigt einen elektrischen Generator G gemäß eines weiteren Ausführungsbeispiels.

Eine Besonderheit dieses Generators G besteht darin, dass eine Erregerspule 40c aus einer Verschaltung (hier: Reihenschaltung) mehrerer (hier: zwei) Einzelspulen 40c-1, 40c-2 gebildet ist, wobei mehr als zwei (hier: drei) Erregerspulenanschlüsse L1, L2 und L3 über (nicht dargestellte) Schleifringe am Rotor mit entsprechenden stationären Außenanschlüssen L1, L2 und L3 elektrisch verbunden sind, und wobei die Verschaltung der Einzelspulen 40c-1 und 40c-2 sowie die herausgeführten Anschlüsse L1, L2 und L3 derart vorgesehen sind, dass durch Ansteuern einer Schaltereinrichtung, hier eines Umschalters S3, eine wahlweise modifizierbare Bestromung der aus den Einzelspulen 40c-1, 40c-2 gebildeten Erregerspule 40c bewirkbar ist.

Im dargestellten Ausführungsbeispiel bildet der Spulenanschluss L2 einen Mittenabgriff der aus den Einzelspulen 40c-1, 40c-2 gebildeten Reihenschaltung. Mithin kann durch den Schalter S3 eine Modifikation der Bestromung der Erregerspule 40c dergestalt erfolgen, dass in einem ersten Schaltzustand eine Erregerspannung Uerr an den Anschlüssen L1 und L2 angelegt wird, so dass eine Bestromung lediglich der Einzelspule 40c-1 erfolgt. Demgegenüber kann nach Umschalten des Schalters S3 ein zweiter Schaltzustand realisiert werden, bei welchem die Erregerspannung Uerr an den Anschlüssen L1 und L3 angelegt wird, so dass eine gleichzeitige Bestromung beider Einzelspulen 40c-1, 40c-2 erfolgt.

Der Vorteil des Generators G mit einer aus mehreren Einzelspulen zusammengesetzten Erregerspule, wie z. B. der Erregerspule 40c, besteht darin, dass durch die Ansteuerung der betreffenden Schaltereinrichtung (hier z. B. Schalter S3) die elektrischen Eigenschaften, insbesondere die resultierende Induktivität L sowie der resultierende ohmsche Widerstand R, auch im Betrieb des Generator G variierbar sind.

In Anbetracht dessen, dass die Erregerzeitkonstante τ von diesen elektrischen Eigenschaften der Erregerspule abhängig ist, kann bei geeigneter Ausgestaltung der Einzelspulen und deren Verschaltung vorteilhaft zwischen verschiedenen Erregerzeitkonstanten umgeschaltet werden. Im vorliegenden Beispiel der zwei in Reihenschaltung angeordneten Einzelspulen 40c-1, 40c-2 besteht die hierfür geeignete Ausgestaltung darin, dass diese Einzelspulen nicht identisch zueinander ausgestaltet sind.

Ein Generator G der in Fig. 7 dargestellten Art kann im Rahmen der Erfindung vorteilhaft in Verbindung mit Steuerungsverfahren bzw. Steuerungsvorrichtung der bereits beschriebenen Art betrieben werden. In diesem Fall ist das Steuerverfahren bzw. die Steuervorrichtung lediglich dahingehend zu modifizieren, dass im Falle einer Ausnahmesituation (bzw. durch die Ausnahmesteuereinrichtung) zusätzlich eine Ansteuerung der erwähnten Schaltereinrichtung zwecks Modifizierung der Bestromung bewirkbar ist.

Der in Fig. 7 dargestellte Generator G kann somit insbesondere z. B. bei den Vorrichtungen 10 (Fig. 4) und 10a (Fig. 5) als der dort angesteuerte Generator G vorgesehen sein, wobei die Ausnahmesteuereinrichtung 18 bzw. 18a in diesem Fall zusätzlich die Ansteuerung des Schalters S3 bewirkt. Entsprechende Kriterien für die Ansteuerung eines bestimmten Schaltzustandes können in programmgesteuerter Weise von der Ausnahmesteuereinrichtung 18 bzw. 18a angewandt werden.

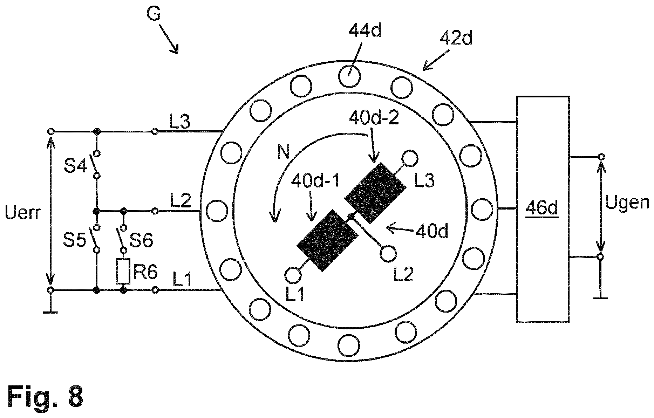

Fig. 8 zeigt einen elektrischen Generator G gemäß eines weiteren Ausführungsbeispiels.

Wie der bereits mit Bezug auf die Fig. 7 beschriebene Generator G besitzt auch der Generator G gemäß Fig. 8 eine Erregerspule 40d, die aus einer Reihenschaltung von zwei Einzelspulen 40d-1, 40d-2 gebildet ist, wobei wieder zwei äußere Anschlüsse L1, L3 und ein Mittenabgriff L2 für das Anlegen einer Erregerspannung Uerr herausgeführt sind.

Anders ausgestaltet ist jedoch eine Schaltereinrichtung, die bei dem Generator G von Fig. 8 aus nicht nur einem Schalter, sondern aus drei Schaltern S4, S5 und S6 gebildet ist.

Bei dieser Schaltereinrichtung wird die Erregerspannung Uerr an den Anschlüssen L1 und L3 angelegt, wobei mittels der Schalter S4 und S5 jedoch wahlweise eine niederohmige Verbindung zwischen den Anschlüssen L3 und L2 bzw. den Anschlüssen L1 und L2 geschaffen werden kann, um die zugehörigen Einzelspulen 40d-2 bzw. 40d-1 zu "inaktivieren". Mit diesen beiden Schaltern S4, S5 sind somit bereits drei verschiedene Schaltzustände entsprechend drei modifizierten Bestromungsvarianten möglich, nämlich eine Bestromung der ersten Einzelspule 40d-1, eine Bestromung der zweiten Einzelspule 40d-2 sowie eine Bestromung beider Einzelspulen 40d-1 und 40d-2 (Der weitere, vierte Schaltzustand, bei welchem S4 und S5 geschlossen wäre, ist nicht sinnvoll).

Mittels des Schalters S6 lassen sich weitere Schaltzustände vorsehen, bei welchen der Einzelspule 40d-1 ein ohmscher Widerstand R6 parallelgeschaltet wird.

Abweichend von Fig. 8 könnte zur Realisierung weiterer Schaltzustände auch z. B. eine weitere Reihenschaltung aus einem Schalter und einem ohmschen Widerstand zwischen den Anschlüssen L2 und L3 vorgesehen sein. Außerdem kann es im Rahmen der Erfindung vorteilhaft sein, wenn die Schaltereinrichtung alternativ oder zusätzlich zu einer ansteuerbaren Parallelschaltung eines ohmschen Widerstandes zu einer Einzelspule die Möglichkeit einer ansteuerbaren Reihenschaltung eines ohmschen Widerstandes mit wenigstens einer Einzelspule gestattet (Zu diesem Zweck kann in wenigstens einer der "Anschlusszuführungen", also in Fig. 8 etwa an den Anschlussleitungen bei L1, L2 und L3 eine Parallelschaltung eines ohmschen Widerstandes mit einem ansteuerbaren Schalter vorgesehen sein, so dass bei offenem Schalter der ohmsche Widerstand wirksam ist und bei geschlossenem Schalter dieser Widerstand niederohmig überbrückt wird). Ferner kommt es im Rahmen der Erfindung bei einer derartigen Schaltereinrichtung in Betracht, in einer Anschlussleitung einen ansteuerbaren Schalter (also ggf. auch ohne parallel geschalteten Widerstand) einzufügen, etwa um damit eine besonders rasche "Abschaltung" der Erregerspannungszufuhr zu einer oder mehreren betreffenden Einzelspulen zu ermöglichen.

Auch der Generator G gemäß Fig. 8 kann in Verbindung mit einem Steuerverfahren bzw. einer Steuervorrichtung der bereits beschriebenen Art betrieben werden. Bei einem Betrieb mittels der Vorrichtung 10 (Fig. 4) oder 10a (Fig. 5) müsste lediglich die betreffende Ausnahmesteuereinrichtung 18 bzw. 18a zur Ansteuerung auch der Schalter S4, S5 und S6 ausgebildet werden.

## Patentansprüche

1. Verfahren zur Steuerung einer Erregerspannung (Uerr) eines fremderregten elektrischen Generators (G) für ein Bordnetz (B) eines Kraftfahrzeuges, umfassend eine Einstellung der Erregerspannung (Uerr) im Rahmen einer Regelung einer Ist-Ausgangsspannung (Ugen) des Generators (G) auf eine vorbestimmte Soll-Ausgangsspannung (Ugensoll) des Generators (G), wobei
basierend auf einer Auswertung von Lastanforderungen (h1, h2), wobei jede Lastanforderung (h1, h2) jeweils eine für einen betreffenden Spitzenlastverbraucher (SL1, SL2) unmittelbar vor dessen tatsächlicher Aktivierung vorliegende Information über den mit dessen Aktivierung einhergehenden elektrischen Leistungsbedarf enthält, wenigstens eines aus dem Bordnetz (B) versorgten Spitzenlastverbrauchers (SL1, SL2) Ausnahmesituationen erfasst werden und dass im Falle einer Ausnahmesituation eine modifizierte Einstellung der Erregerspannung (Uerr) vorgenommen wird, wobei die Erfassung der Ausnahmesituation darauf beruht, dass der zu erwartende zusätzliche Leistungsbedarf innerhalb einer vorbestimmten Zeitspanne einen vorbestimmten Schwellwert übersteigt,
**dadurch gekennzeichnet, dass**
die modifizierte Einstellung eine zeitweilige Unterbrechung der Regelung und eine Einstellung der Erregerspannung (Uerr) in Abhängigkeit von einem Ausnahmesteuersignal (s1; s2) vorsieht, welches in Abhängigkeit von einem Ergebnis der Auswertung erzeugt wird,
wobei als Ergebnis der Auswertung ein bestimmter zusätzlicher Leistungsbedarf für eine bestimmte Zeitspanne ermittelt wird.

2. Verfahren nach Anspruch 1, wobei die Lastanforderungen (h1, h2) über ein digitales Bussystem des Kraftfahrzeuges kommuniziert und mittels einer programmgesteuerten Einrichtung (16) ausgewertet werden.

3. Verfahren nach einem der vorangehenden Ansprüche, **dadurch gekennzeichnet, dass** die Einstellung der Erregerspannung (Uerr) auf negative Spannungswerte und/oder auf Spannungswerte mit einem gegenüber der Bordnetzspannung (Ubat) erhöhten Absolutwert ermöglicht ist.

4. Verfahren zum Betrieb eines fremderregten elektrischen Generators (G) für ein Bordnetz (B) eines Kraftfahrzeuges, umfassend ein Verfahren zur Steuerung einer Erregerspannung (Uerr) des Generators nach einem der vorangehenden Ansprüche, wobei
basierend auf einer Auswertung von Lastanforderungen (h1, h2) wenigstens eines aus dem Bordnetz (B) versorgten Spitzenlastverbrauchers (SL1, SL2) Ausnahmesituationen erfasst werden, und dass im Falle einer Ausnahmesituation eine durch Ansteuerung einer Schaltereinrichtung (S1; S2) realisierte modifizierte Bestromung einer aus wenigstens zwei individuell bestrombaren Spulenelementen (40c-1, 40c-2; 40d-1, 40d-2) gebildeten Erregerspule (40c; 40d) des Generators (G) vorgenommen wird.

5. Vorrichtung (10; 10a) zur Durchführung eines Verfahrens nach einem der vorangehenden Ansprüche, umfassend
- einen aus dem Bordnetz (B) versorgten ansteuerbaren DC/DC-Wandler (12; 12a) zur Erzeugung einer Erregerspannung (Uerr) für den Generator (G),
- eine Vergleichseinrichtung (14; 14a) zum Vergleichen einer Ist-Ausgangsspannung (Ugen) des Generators (G) mit einer vorbestimmten Soll-Ausgangsspannung (Ugensoll) des Generators (G) und zum Ausgeben eines Abweichungssignals (a) an den DC/DC-Wandler (12; 12a), um die Ist-Ausgangsspannung (Ugen) auf die Soll-Ausgangsspannung (Ugensoll) zu regeln,
- wobei die Vorrichtung (10; 10a) eine Auswerteeinrichtung (16; 16a) zur Auswertung von Lastanforderungen (h1, h2), wobei jede Lastanforderung (h1, h2) jeweils eine für einen betreffenden Spitzenlastverbraucher (SL1, SL2) unmittelbar vor dessen tatsächlicher Aktivierung vorliegende Information über den mit dessen Aktivierung einhergehenden elektrischen Leistungsbedarf enthält, wenigstens eines aus dem Bordnetz (B) versorgten Spitzenlastverbrauchers (SL1, SL2) und zur Erfassung von Ausnahmesituationen, wobei die Erfassung der Ausnahmesituation darauf beruht, dass der zu erwartende zusätzliche Leistungsbedarf innerhalb einer vorbestimmten Zeitspanne einen vorbestimmten Schwellwert übersteigt,
**gekennzeichnet durch,**
eine Ausnahmesteuereinrichtung (18; 18a) zum Bewirken einer modifizierten Einstellung der Erregerspannung (Uerr) im Falle einer Ausnahmesituation umfasst,
wobei die modifizierte Einstellung eine zeitweilige Unterbrechung der Regelung und eine Einstellung der Erregerspannung (Uerr) in Abhängigkeit von einem Ausnahmesteuersignal (s1; s2) vorsieht, welches in Abhängigkeit von einem Ergebnis der Auswertung erzeugt wird,
wobei die Auswerteeinrichtung (16; 16a) ferner eingerichtet ist, als Ergebnis der Auswertung ein bestimmter zusätzlicher Leistungsbedarf für eine bestimmte Zeitspanne zu ermitteln.

## Claims

1. Method for controlling an excitation voltage (Uerr) of an externally excited electrical generator (G) for an on-board electrical system (B) of a motor vehicle, comprising setting the excitation voltage (Uerr) within the scope of regulating an actual output voltage (Ugen) of the generator (G) at a predetermined setpoint output voltage (Ugenset) of the generator (G), wherein, based on an evaluation of load requirements (h1, h2) of at least one peak load consumer (SL1, SL2) which is supplied from the on-board electrical system (B), wherein each load requirement (h1, h2) respectively comprises an item of information which is available to a peak load consumer (SL1, SL2) in question immediately before it is actually activated and concerns the electrical power requirement associated with the activation of the said peak load consumer, exceptional situations are detected, and wherein, in the event of an exceptional situation, modified setting of the excitation voltage (Uerr) is performed, wherein the detection of the exceptional situation is based on the expected additional power requirement exceeding a predetermined threshold value within a predetermined time period, **characterized in that**
the modified setting provides a temporary interruption in the regulation and setting of the excitation voltage (Uerr) depending on an exception control signal (s1; s2) which is generated depending on a result of the evaluation,
wherein a specific additional power requirement for a specific time period is ascertained as the result of the evaluation.

2. Method according to Claim 1, wherein the load requirements (h1, h2) are communicated by means of a digital bus system of the motor vehicle and are evaluated by means of a program-controlled device (16).

3. Method according to one of the preceding claims, **characterized in that** setting the excitation voltage (Uerr) to negative voltage values and/or to voltage values with an absolute value which is increased in relation to the on-board electrical system voltage (Ubat) is rendered possible.

4. Method for operating an externally excited electrical generator (G) for an on-board electrical system (B) of a motor vehicle, comprising a method for controlling an excitation voltage (Uerr) of the generator according to one of the preceding claims, wherein, based on an evaluation of load requirements (h1, h2) of at least one peak load consumer (SL1, SL2) which is supplied from the on-board electrical system (B), exceptional situations are detected, and wherein, in the event of an exceptional situation, a modified current supply, which is realized by driving a switch device (S1; S2), to an excitation coil (40c; 40d) of the generator (G), which excitation coil is formed from at least two coil elements (40c-1, 40c-2; 40d-1, 40d-2) which can be supplied with current individually, is performed.

5. Apparatus (10; 10a) for carrying out a method according to one of the preceding claims, comprising
- a drivable DC/DC converter (12; 12a), which is supplied from the on-board electrical system (B), for generating an excitation voltage (Uerr) for the generator (G),
- a comparison device (14; 14a) for comparing an actual output voltage (Ugen) of the generator (G) with a predetermined setpoint output voltage (Ugenset) of the generator (G) and for outputting a deviation signal (a) to the DC/DC converter (12; 12a) in order to regulate the actual output voltage (Ugen) at the setpoint output voltage (Ugenset),
- wherein the apparatus (10; 10a) comprises an evaluation device (16; 16a) for evaluating load requirements (h1, h2) of at least one peak load consumer (SL1, SL2) which is supplied from the on-board electrical system (B), wherein each load requirement (h1, h2) respectively comprises an item of information which is available to a peak load consumer (SL1, SL2) in question immediately before it is actually activated and concerns the electrical power requirement associated with the activation of the said peak load consumer, and for detecting exceptional situations, wherein the detection of the exceptional situation is based on the expected additional power requirement exceeding a predetermined threshold value within a predetermined time period,
**characterized by**
an exception control device (18; 18a) for implementing modified setting of the excitation voltage (Uerr) in the event of an exceptional situation,
wherein the modified setting provides a temporary interruption in the regulation and setting of the excitation voltage (Uerr) depending on an exception control signal (s1; s2), which is generated depending on a result of the evaluation,
wherein the evaluation device (16; 16a) is further designed to ascertain a specific additional power requirement for a specific time period as the result of the evaluation.

## Revendications

1. Procédé de commande d'une tension d'excitation (Uerr) d'un générateur (G) électrique à excitation externe pour un réseau de bord (B) d'un véhicule automobile, comprenant un réglage de la tension d'excitation (Uerr) dans le cadre d'une régulation d'une tension de sortie réelle (Ugen) du générateur (G) à une tension de sortie de consigne (Ugensoll) prédéterminée du générateur (G),
en se basant sur une évaluation des sollicitations de charge (h1, h2) d'au moins un récepteur de charge de crête (SL1, SL2) alimenté à partir du réseau de bord (B), chaque sollicitation de charge (h1, h2) contenant respectivement, pour un récepteur de charge de crête (SL1, SL2) concerné, une information présente immédiatement avant son activation effective à propos d'un besoin de puissance électrique qui accompagne son activation, des situations exceptionnelles étant détectées et dans le cas d'une situation exceptionnelle, un réglage modifié de la tension d'excitation (Uerr) étant effectué, la détection de la situation exceptionnelle s'appuyant sur le fait que le besoin de puissance supplémentaire à attendre au sein d'un intervalle de temps prédéterminé dépasse une valeur de seuil prédéterminée,
**caractérisé en ce que**
le réglage modifié prévoit une interruption temporaire de la régulation et un réglage de la tension d'excitation (Uerr) en fonction d'un signal de commande d'exception (s1 ; s2) qui est généré en fonction d'un résultat de l'évaluation,
le résultat déterminé de l'évaluation étant un besoin de puissance supplémentaire donné pendant un intervalle de temps donné.

2. Procédé selon la revendication 1, les sollicitations de charge (h1, h2) étant communiquées par le biais d'un système de bus numérique du véhicule automobile et évaluées au moyen d'un dispositif commandé par programme (16).

3. Procédé selon l'une des revendications précédentes, **caractérisé en ce que** le réglage de la tension d'excitation (Uerr) est rendu possible sur des valeurs de tension négatives et/ou sur des valeurs de tension ayant une valeur absolue accrue par rapport à la tension du réseau de bord (Ubat).

4. Procédé pour faire fonctionner un générateur (G) électrique à excitation externe pour un réseau de bord (B) d'un véhicule automobile,
comprenant un procédé de commande d'une tension d'excitation (Uerr) du générateur selon l'une des revendications précédentes,
des situations exceptionnelles étant détectées en se basant sur une évaluation des sollicitations de charge (h1, h2) d'au moins un récepteur de charge de crête (SL1, SL2) alimenté à partir du réseau de bord (B) et, dans le cas d'une situation exceptionnelle, une alimentation électrique modifiée, réalisée par la commande d'un dispositif commutateur (S1 ; S2), d'une bobine d'excitateur (40c ; 40d) du générateur (G), formée par au moins deux éléments de bobine (40c-1, 40c2 ; 40d-1, 40d2) pouvant être alimentés individuellement, est effectuée.

5. Arrangement (10 ; 10a) pour mettre en œuvre un procédé selon l'une des revendications précédentes, comprenant
- un convertisseur CC/CC (12 ; 12a) commandable alimenté à partir du réseau de bord (B) et servant à générer une tension d'excitation (Uerr) pour le générateur (G),
- un dispositif comparateur (14 ; 14a) destiné à comparer une tension de sortie réelle (Ugen) du générateur (G) avec une tension de sortie de consigne (Ugensoll) prédéterminée du générateur (G) et pour délivrer un signal d'écart (a) au convertisseur CC/CC (12 ; 12a) afin de réguler la tension de sortie réelle (Ugen) à la tension de sortie de consigne (Ugensoll),
- l'arrangement (10 ; 10a) comprenant un dispositif d'évaluation (16 ; 16a) destiné à évaluer des sollicitations de charge (h1, h2) d'au moins un récepteur de charge de crête (SL1, SL2) alimenté à partir du réseau de bord (B), chaque sollicitation de charge (h1, h2) contenant respectivement, pour un récepteur de charge de crête (SL1, SL2) concerné, une information présente immédiatement avant son activation effective à propos d'un besoin de puissance électrique qui accompagne son activation, et à détecter des situations exceptionnelles, la détection de la situation exceptionnelle s'appuyant sur le fait que le besoin de puissance supplémentaire à attendre au sein d'un intervalle de temps prédéterminé dépasse une valeur de seuil prédéterminée, **caractérisé par**
comprendre un dispositif de commande d'exception (18, 18a) destiné à provoquer un réglage modifié de la tension d'excitation (Uerr) dans le cas d'une situation d'exception,
le réglage modifié prévoyant une interruption temporaire de la régulation et un réglage de la tension d'excitation (Uerr) en fonction d'un signal de commande d'exception (s1 ; s2) qui est généré en fonction d'un résultat de l'évaluation,
le dispositif d'évaluation (16 ; 16a) étant en outre conçu pour déterminer en tant que résultat de l'évaluation un besoin de puissance supplémentaire donné pendant un intervalle de temps donné.
